(19) Europäisches Patentamt
European Patent Office
Office européen des brevets

(11) **EP 2 050 729 A1**

(12) **EUROPÄISCHE PATENTANMELDUNG**

(43) Veröffentlichungstag:
**22.04.2009 Patentblatt 2009/17**

(51) Int Cl.:
***C04B 40/00*** *(2006.01)*

(21) Anmeldenummer: **07118886.6**

(22) Anmeldetag: **19.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Sika Technology AG**
**6340 Baar (CH)**

(72) Erfinder:
- **Blank, Norman**
**8803, Rüschlikon (CH)**
- **Mäder, Urs**
**8500, Frauenfeld (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **Pulverförmiges Zusatzmittel und Verfahren zu dessen Herstellung**

(57) Bei einem pulverförmigen Zusatzmittel (1) insbesondere für hydraulische Bindemittel. weisen die pulverförmigen Teilchen (1) des Zusatzmittels eine innere Schicht (2) und eine äussere Schicht (3) aus einem Material auf, das als Zusatzmittel wirkt.

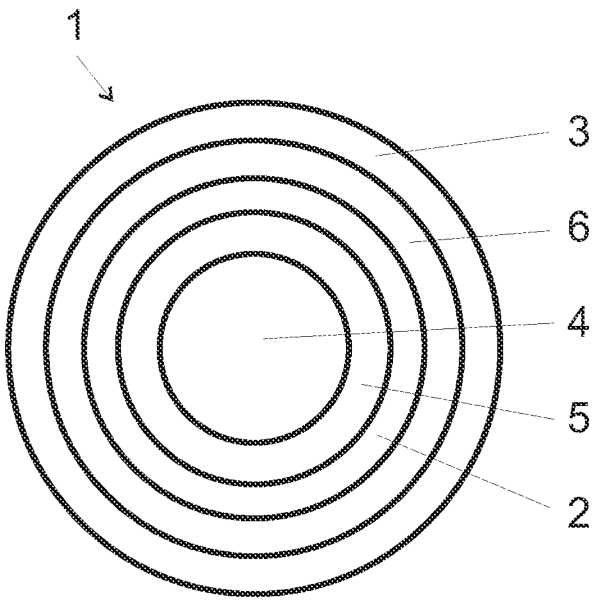


FIG. 3

EP 2 050 729 A1

## Beschreibung

### Technisches Gebiet

Die Erfindung geht aus von einem pulverförmigen Zusatzmittel nach dem Oberbegriff des ersten Anspruches. Die Erfindung geht ebenfalls aus von einem Verfahren zur Herstellung eines pulverförmigen Zusatzmittels nach dem Oberbegriff des Verfahrens-Anspruches.

### Stand der Technik

Zusatzmittel sind lange bekannt und können verschieden Funktionen aufweisen wie wie Luftporenbilder, Verzögerer, Beschleuniger, Stabilisierer, Chromatreduzierer, Einpresshilfen, Schaumbildner, Dichtungsmittel, Recyclinghilfen, Verflüssiger und Fliessmittel. Diese Zusatzmittel können flüssig oder getrocknet als Pulver verwendet werden und werden insbesondere in hydraulischen Bindemitteln verwendet.

Polykondensate wie sulfonierte Naphthalinkondensate, sulfonierte Melaminkondensate, Ligninsulfonate werden als Verflüssiger verwendet, um die Verarbeitbarkeit und das zeitabhängige Fliessverhalten von hydraulischen Bindemitteln wie Zement, Mörtel, Gips und Beton zu verbessern. Diese wasserreduzierenden Mittel sind in der Lage, die Fliessbarkeit solcher Mischungen zu verbessern, diese Fliessbarkeit kann aber normalerweise nicht während einer ausreichend langen Zeitperiode aufrecht gehalten werden. Als Folge davon müssen in bestimmten Intervallen zusätzliche Mengen wasserreduzierender Mittel zugegeben werden. Diese Mehrfachdosierung ist jedoch nicht erwünscht, da sie technisch schwierig auszuführen ist.

Aus der EP 0 845 444 A1 ist ein Betonzusatzmittel bekannt, welches eine Mischung aus einem Ligninsulfonat und einem wasserlöslichen Copolymer aus Vinylacetat und einer N-substituierten Maleaminsäure enthält und welches als Superverflüssiger dient. Durch die Mischung von Ligninsulfonat und Copolymer soll verhindert werden, dass das Ligninsulfonat in mehreren Intervallen zugegeben werden muss. Dieser Ansatz gibt an sich gute Resultate, der Verbrauch der Komponenten ist jedoch relativ hoch.

Polyalkylenglycol-Carboxylate, im folgenden Polycarboxylate, sind seit einigen Jahren als Dispergiermittel für wässrige Dispersionen im Einsatz. Sie ermöglichen drastisch die Reduktion des Wassergehaltes dieser Dispersionen, insbesondere bei hydraulischen Bindemittelsystemen. Ursprünglich wurden diese Polymere in wässriger Lösung hergestellt und als wässrige Polymerlösungen verwendet. Der Nachteil dieser Lösungen sind jedoch hohe Transportkosten, da ein hoher Anteil Lösungsmittel mittransportiert werden muss, weiter kann es zu Bakterienbefall kommen, wodurch sich eine beschränkte Lagerfähigkeit ergibt.
Deshalb werden Polycarboxylate als Pulver verwendet, sei dies durch Trocknung der in wässriger Lösung vorliegenden Polycarboxylate oder durch die Herstellung fester Polycarboxylate wie beispielsweise aus der WO 03/080714 A1 bekannt. Solche Pulver, beziehungsweise Feststoffe, haben gegenüber wässrigen Lösungen den technischen Vorteil, dass beim Transport wesentlich geringere Kosten anfallen, die Lagerstabilität wegen geringerem biologischen Befall oder geringerer Spaltung möglicher Esterbindungen in den modifizierten Polycarboxylaten deutlich höher ist und die Frostempfindlichkeit deutlich reduziert wird. Solche Polycarboxylate zeigen in vieler Hinsicht die besseren Eigenschaften als bisherige Verflüssiger. Da diese Polycarboxylate aber relativ teuer sein können, wird versucht, möglichst wenig von ihnen zugeben zu müssen. Ebenso werden nicht alle geforderten Eigenschaften von nur einem Polycarboxylat oder Mischungen derselben erreicht, sodass auch andere geeignete Verflüssiger zum Einsatz kommen müssen

### Darstellung der Erfindung

Der Erfindung liegt die Aufgabe zugrunde, bei einem pulverförmigen Zusatzmittel der eingangs genannten Art ein Zusatzmittel zur Verfügung zu stellen, welche die oben genannten Nachteile vermeidet, d.h. ein kostengünstiges Zusatzmittel bereitzustellen welches nicht in mehreren Intervallen zugegeben werden muss und die Vorteile von unterschiedlichen chemischen Wirkweisen kombiniert.

Erfindungsgemäss wird dies durch die Merkmale des ersten Anspruches erreicht.

Kern der Erfindung ist es also, dass die pulverförmigen Teilchen des Zusatzmittels eine oder mehrere innere Schicht(en) und eine äussere Schicht aus einem Material das als Zusatzmittel wirkt aufweisen.

Die Vorteile der Erfindung sind unter anderem darin zu sehen, dass durch den zweischichtigen oder mehrschichtigen Aufbau keine Mehrfachdosierung vorgenommen werden muss. In der äusseren Schicht kann ein billigerer Verflüssiger verwendet werden, durch den die Grundverflüssigung erzielt wird. Diese wird vorzugsweise schneller absorbiert als die innere Schicht(en). Die äussere Schicht löst sich zuerst auf und ergibt eine erste Verflüssigung bis zur homogenen Mischung. Die aktiven Stellen des hydraulischen Bindemittels, des Zementkornes, werden absättigt. Dadurch wird weniger der inneren Schicht benötigt und somit die Effizienz der inneren Schicht erhöht. Wenn die innere Schicht ein teurerer Verflüssiger ist, können so gegenüber der herkömmlichen Methode viel preiswertere Zusatzmittel

hergestellt werden. Weiter wird dadurch eine bessere Verteilung des Verflüssigers im hydraulischen Bindemittel erzielt und es ergeben sich keine lokalen Überdosierungen, auch kann dadurch eine zeitliche Verzögerung der Wirkweise erzielt werden.

Zweckmässig ist es auch, unterschiedliche Effekte mittels verschiedener Zusatzmitteln zu erzielen. Insbesondere lassen sich so Luftporenbilder, Verzögerer, Beschleuniger, Stabilisierer, Chromatreduzierer, Einpresshilfen, Schaumbildner, Dichtungsmittel, Recyclinghilfen als innerer Kern oder innere Schichten des Mehrschichtpulvers in den hydraulischen Binder einbringen.

Weitere vorteilhafte Ausgestaltungen der Erfindung ergeben sich aus den abhängigen Patentansprüchen.

## Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:

Fig. 1 einen Querschnitt durch ein erfindungsgemässes Zusatzmittel;
Fig. 2 schematisch die Auflösungsrate des Zusatzmittels nach Fig. 1;
Fig. 3 einen Querschnitt durch ein weiteres erfindungsgemässes Zusatzmittel;
Fig. 4 schematisch die Auflösungsrate des Zusatzmittels nach Fig. 3.

Es sind nur die für das unmittelbare Verständnis der Erfindung wesentlichen Elemente gezeigt.

## Wege zur Ausführung der Erfindung

Bei der vorliegenden Erfindung wird ein Zusatzmittel hergestellt, welches mindestens zwei Schichten von Verflüssigern aufweist. In Fig. 1 ist schematisch ein solches Zusatzmittel 1, welches zwei Schichten aufweist, dargestellt. Es weist mindestens eine innere Schicht mit einem ersten Verflüssiger 2 und eine äussere Schicht mit einem zweiten Verflüssiger 3 auf. Beim Auflösen dieses zweischichtigen Zusatzmittels 1 wird gemäss Auflösungsdiagramm in Fig. 2 zuerst der äussere zweite Verflüssiger 3 und dann der innere erste Verflüssiger 2 aufgelöst. In einem Übergangsbereich können beide Verflüssiger miteinander freigesetzt werden.

Es versteht sich von selbst, dass die in Fig. 1 und den weiteren Figuren dargestellten Schichten nur eine schematische Darstellung zeigen. Die Dicke und Form der Schichten ist beliebig und insbesondere die Dicke wird der entsprechend Menge an abzugebenden Material angepasst. Die Schichten müssen zudem nicht geschlossen sein, so dass teilweise auch die inneren Schichten direkt an der Oberfläche liegen können.

Als Verflüssiger und Plastifizierungsmittel für hydraulische Bindemittel wie Beton, Mörtel und Gips können beispielsweise Naphtalinsulfonat, Ligninsulfonat, Melaminsulfonat, Polycarboxylate, Polyacrylate, usw. verwendet werden.

Naphtalinsulfonat weist die Varianten Natrium-Naphtalinsulfonat, Calcium-Naphtalinsulfonat auf und bewirkt sehr gute Verflüssigung und verleiht hohe Frühfestigkeiten. Solche Produkte sind dem Fachmann bekannt und beispielsweise in der US 3,537,869 und der EP 0 214 412 A1 beschrieben.

Ligninsulfonat ist ein Abfallprodukt der Celluloseindustrie, Varianten sind Natrium-Ligninsulfonat, Calcium-Ligninsulfonat, Magnesium-Ligninsulfonat. Ligninsulfonat wird aus Cellulose durch Hydrolyse und Sulfonierung hergestellt. Ligninsulfonat bewirkt eine gute Verflüssigung bei niedriger Dosierung, der Restzucker kann eine verzögernde Wirkung haben. Solche Produkte sind dem Fachmann bekannt und beispielsweise in der DE 32 04 326 A1 beschrieben.

Melaminsulfonat weist ebenfalls eine sehr gute Verflüssigung auf. Solche Produkte sind dem Fachmann bekannt und beispielsweise in der DE 1 671 017 OS beschrieben.

Besonders bevorzugte Hochleistungsverflüssiger und Fliessmittel bestehen aus Polycarboxylaten. Unter Polycarboxylaten versteht man Kammpolymere, die aus einer Hauptkette, an die Carbonsäuregruppen als freie Säuren oder in Form ihrer Salze gebunden sind, und Seitenketten aus Polyalkylenoxid bestehen. Solche Polycarboxylate sind an sich bekannt, z.B. aus der EP 1 136 508 A1, EP 1 138 696 A1 und EP 1 138 697 A1 der Anmelderin. Die Offenbarung dieser Polycarboxylate ist im folgenden miteingeschlossen. Solche Polycarboxylate werden unter dem Namen Visco-Crete® vertrieben.

Die Polyalkyleneoxid- oder Polyalkylenglykol-Seitenketten können über Esterbindung, Amidbindung oder Etherbindung an die Hauptkette gebunden sein. Neben den Carbonsäuregruppen und den Polyalkylenoxid-Seitenketten können noch weitere funktionelle oder nicht-funktionelle Gruppen, an die Hauptkette gebunden sein.

Solche Kammpolymere können beispielsweise durch Copolymerisation von ungesättigten mono- oder di-Carbonsäuren mit ungesättigten Carbonsäureestern, ungesättigten Carbonsäureamiden, Allylether oder Vinylether hergestellt werden. Die Carbonsäuren im fertigen Kammpolymer können in Form ihrer freien Säure oder ganz oder teilweise in Form ihrer

Salze vorliegen.

Die Kammpolymere können auch durch polymeranaloge Umsetzungen hergestellt werden. Dabei wird ein Polymer, welches latente oder freie Hydroxylfunktionen enthalten unter Bedingungen umgesetzt, die zu teilweiser Amidierung beziehungsweise Veresterung der Carboxylgruppen führen.

Das Polyalkylenglykol der Seitenkette basiert auf polymerisierten epoxidhaltigen Verbindungen, wie zum Beispiel auf Ethylenoxid, Propylenoxid, 1-Butenoxid, Phenylethylenoxid, etc.. Bevorzugt besteht die Polyetherseitenkette somit aus Polyethylenoxid oder Polypropylenoxid oder einem Misch-Copolymer aus Ethylenoxid und Propylenoxid und hat am freien Ende eine Hydroxylgruppe, eine primäre Aminogruppe oder eine Alkylgruppe mit 1 bis 20 Kohlenstoffatomen, die linear, verzweigt oder zyklisch ist, bevorzugt eine lineare Alkylgruppe mit 1 bis 4 Kohlenstoffatomen.

Diese Polycarboxylate haben ein Molekulargewicht von 5'000 bis 200'000, bevorzugt 8'000 bis 100'000, besonders bevorzugt ein Molekulargewicht von 10'000 bis 80'000. Die Cabonsäuresalze können Alkalimetall oder Erdalkalimetallsalze oder Salze anderer zwei- oder dreiwertiger Metallionen, Ammoniumionen, organische Ammonium-Gruppen oder Mischungen sein.

In einer Ausführungsform besteht das erfindungsgemässe Polycarboxylat aus vier Struktureinheiten (a, b, c und d) und hat die Strukturformel **A**

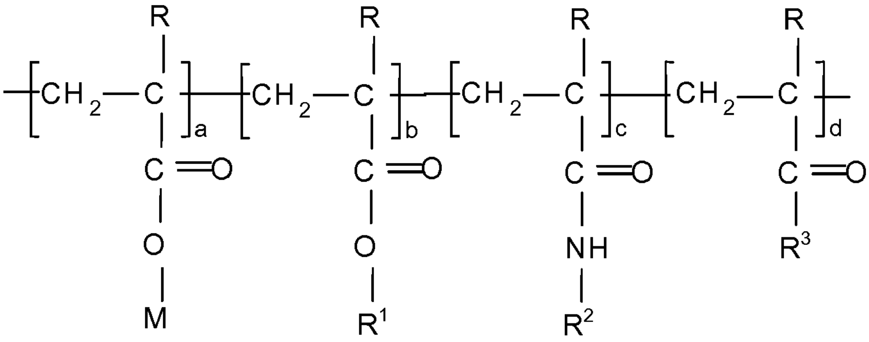

wobei:

M = Wasserstoff, Alkalimetallion, Erdalkalimetallion, zwei- oder dreiwertiges Metallion, Ammoniumion, organische Ammonium Gruppe oder eine Mischungen davon,
R = jedes R unabhängig von den anderen Wasserstoff oder Methyl-,
$R^1$ und $R^2$ = $C_1$ bis $C_{20}$ Alkyl, Cycloalkyl, oder Alkylaryl,

$-[AO]_n-R4$,

wobei A = $C_2$ bis $C_4$ Alkylen, R4 = $C_1$ bis $C_{20}$ Alkyl, Cyclohexyl, oder Alkylaryl, und n = 2 - 250, bevorzugt n = 8 - 200, besonders bevorzugt n = 11 - 150, insbesondere n = 11-100 ist,
$R^3$ = $-NH_2$, $-NR^5R^6$, $-OR^7NR^8R^9$,
wobei $R^5$ und $R^6$ unabhängig voneinander eine $C_1$ bis $C_{20}$ Alkyl-, Cycloalky-l oder Alkylaryl- oder Arylgruppe ist oder eine Hydroxyalkylgruppe, wie beispielsweise Hydroxyethly-, Hydroxypropyl-, Hydroxybutylgruppe ist, oder eine Acetoxyethyl- ($CH_3$-CO-O-$CH_2$-$CH_2$-),
Hydroxy-isopropyl- (HO-CH($CH_3$)-$CH_2$-),
Acetoxyisopropylgruppe ($CH_3$-CO-O-CH($CH_3$)-$CH_2$-),
oder $R^5$ und $R^6$ zusammen einen Ring bilden, von dem der Stickstoff ein Teil ist, um einen Morpholin- oder Imidazolinring aufbauen,
wobei $R^7$ eine C2-C4 Alkylengruppe und $R^8$ und $R^9$ unabhängig voneinander eine $C_1$ bis $C_{20}$ Alkyl-, Cycloalky-, Alkylaryl- oder Arylgruppe oder eine Hydroxyalkylgruppe wie beispielsweise Hydroxyethyl-, Hydroxypropyl- oder Hydroxybutylgruppe ist

$$a/b/c/d = (0.1 - 0.9) / (0.1 - 0.9) / (0 - 0.8) / (0 - 0.3),$$

bevorzugt (0.1 - 0.9) / (0.1 - 0.9) / (0 - 0.5) / (0 - 0.1),

mehr bevorzugt (0.1 - 0.9) / (0.1 - 0.9) / (0 - 0.3) / (0 - 0.06),
noch mehr bevorzugt (0.2 - 0.8) / (0.199 - 0.799) / (0.001 - 0.09) / (0 - 0.06),
insbesondere bevorzugt (0.2 - 0.8) / (0.19 - 0.79) / (0 - 0.1) / (0.01 - 0.3), unda+b+c+d=1 1 ist.

Die Abfolge der Bausteine a, b, c, d kann blockweise, alternierend oder zufällig sein.
Polycarboxylate gemäss der Formel A kann man sich aufgebaut vorstellen, aus einer Hauptkette aus polymerisierten Einheiten von Acrylsäure und Methacrylsäure oder einem Misch-Copolymer davon. Die Polyalkylanoxid-Seitenketten sind über Ester- oder Amidgruppen an diese Hauptkette gebunden. An der Hauptkette der Polycarboxylate können neben den Carbonsäuregruppen bzw den Carbonsäure Salzen und den Polyalkylenglyol-Seitenketten noch weitere Gruppen über Ester oder Amidbindung gebunden sein, wie beispielsweise Alkylgruppen, Cycloalkylgruppen, Aromaten, substituierte Aromaten, Hydroxyalkylgruppen, Dialkylaminoalkylgruppen, oder heterozyklische Ringe, bei denen der N der Amidgruppe ein Bestandteil ist, wie Beispielsweise Morpholin oder Imidazol. Beispiele für Gruppen $R^3$ die über ihren N als Amide an die Hauptkette gebunden sind, sind Aminreste, die ein oder zwei voneinander unabhängie aliphatische, cycloaliphatische oder aromatische Reste von 1 bis 20 Kohlenstoffatomen wie beispielsweise Methyl-, Ethyl-, Propyl-, iso-Propyl,-Butyl-, iso-Butyl oder Cyclohexylreste. Beispiele für solche Aminreste sind Dibutylamin oder Dicyclohexylamin. Weitere Beispiele sind Aminreste mit Hydroxyalkylgruppen wie Ethanolamin oder Diethanolamin.
Beispiele für Gruppen $R^3$ die über ihren O als Ester an die Hauptkette gebunden sind, sind aliphatische, cycloaliphatische oder aromatische Reste von 1 bis 20 Kohlenstoffatomen, wie beispielsweise Methyl-, Ethyl-, Propyl-, iso-Propyl,-Butyl-, iso-Butyl- oder Cyclohexylreste. Weitere Beispiele sind Aminoalkoholreste wie Methyl-diethanolamin, Triisopropanolamin, Triethanolamin, Dibutylamino-ethanol, Diisopropanolamin, Diethylaminoethanol, Dimethylamino-ethanol.

Der erste und zweite Verflüssiger können dabei aus unterschiedlichen Kategorien wie Polycarboxylat und Ligninsulfonat oder aus der gleichen Kategorie, d.h. beispielsweise aus Polycarboxylaten unterschiedlicher Bauart bestehen.

Besonders bevorzugt wird als erster Verflüssiger in der inneren Schicht Polycarboxylat und als zweiter Verflüssiger in der äusseren Schicht Naphtalinsulfonat, Ligninsulfonat oder Melaminsulfonat, besonders bevorzugt Ligninsulfonat, verwendet. Durch den sulfonathaltigen Verflüssiger wird die Grundverflüssigung erzielt. So absorbiert beispielsweise das Ligninsulfonat schneller als das Polycarboxylat. Das Ligninsulfonat löst sich zuerst auf und ergibt eine erste Verflüssigung bis zur homogenen Mischung und die aktiven Stellen des Zementkornes werden absättigt. Dadurch wird weniger Polycarboxylat benötigt und somit die Effizienz des Polycarboxylates erhöht. Weiter wird dadurch eine bessere Verteilung des Verflüssiger im hydraulischen Bindemittel erzielt, und es ergeben sich keine lokalen Überdosierungen.

In Fig. 3 ist ein weiteres Zusatzmittel mit zusätzlichen Schichten schematisch dargestellt. Es weist eine äussere Schicht mit einem zweiten Verflüssiger 3 auf, daran anschliessend nach innen folgt eine zweite Zwischenschicht 6, dann folgt der erste Verflüssiger 2, dann eine erste Zwischenschicht 5 und ganz im Innern der Kern 4. Beim Auflösen dieses mehrschichtigen Zusatzmittels 1 wird gemäss Auflösungsdiagramm in Fig. 4 zuerst der äussere zweite Verflüssiger 3, dann die zweite Zwischenschicht 6, dann der innere erste Verflüssiger 2, dann die erste Zwischenschicht 5 und optional, gestrichelt dargestellt, der Kern 4 aufgelöst. In den Übergangsbereichen können jeweils zwei auf sich folgende Schichten miteinander freigesetzt werden.
Nicht dargestellt ist, dass die erste Zwischenschicht 5 und/oder die zweite Zwischenschicht 6 und/oder der Kern 4 weggelassen werden können, oder noch weitere Schichten zusätzlich angeordnet werden können.

Die zusätzlichen Zwischenschichten und der Kern können dabei aus beliebigen Materialien bestehen. Besonders bevorzugt sind dabei Zusatzmittel wie Luftporenbilder, Verzögerer, Beschleuniger, Stabilisierer, Chromatreduzierer, Einpresshilfen, Schaumbildner, Dichtungsmittel, Recyclinghilfen und natürlich Verflüssiger und Fliessmittel oder Mischungen der vorgenannten Zusatzmittel. Die Zwischenschichten und der Kern können auch aus beliebigen anderen Materialien bestehen, wie beispielsweise Polyvinylalkohol PVA.

Die Zwischenschicht dient dabei einerseits zur Steuerung der Abgabe und Auflösung der Verflüssigerschichten und andererseits zur Abgabe weitere Zusatzmittel in das hydraulische Bindemittel. So kann beispielsweise durch die Anordnung von PVA als Schicht 6 zwischen Polycarboxylat als erster Verflüssigerschicht 2 und Ligninsulfonat als zweiter Verflüssigerschicht 3 die Abgabe des Polycarboxylates verzögert werden.

Als Kern 4 kann ein beliebiges Material verwendet werden. Dies können die oben erwähnten Materialien sein oder prinzipiell alle Stoffe, die für die Herstellung des Betons verwendet werden, insbesondere Zementpartikel. Es können auch Stoffe oder Zusatzstoffe, wie zum Beispiel Silikafume, Flugasche, Leichtzuschlag, Schlacke, Fasermaterialien, z.B. organische wie Polypropylenfasern, usw. oder anorganische wie Basalt, Glas usw. verwendet werden. So hat zum Beispiel Flugasche unterschiedlicher Herkunft unterschiedliche Adsorptionseigenschaften und weist somit je nach Herkunft unterschiedliche Eigenschaften im Beton auf. Bei Beschichtung mit Zusatzmitteln ergeben sich identische und angepasstere Eigenschaften, so dass die unterschiedliche Herkunft nicht mehr berücksichtigt werden muss.

Als Kern kann jedoch auch ein mineralisches Trägermaterial, wie es in der WO 00/47533 A1 beschrieben ist, verwendet werden. Diese Trägermaterialien können entsprechend der Offenbarung der WO 00/47533 A1 mit einer ersten Schicht aus Polycarboxylat beschichtet werden und ergeben ein rieselfähige Pulver. Diese wird dann erfindungsgemäss mit weiteren Schichten versehen.

Die zum Aufbau der Schichten verwendeten Verfahren sind dem Fachmann bekannt. Solche Beschichtungsverfahren sind beispielsweise in der W02006/027363 A1 beschrieben, deren Offenbarung hiermit eingeschlossen ist. Die Beschichtung kann beispielsweise in einem Gleichstrommischer, einem Gegenstrommischer oder einem Wirbelschichtmischer mit Rotationszerstäuber erfolgen.

Beispiele zur Herstellung:

Die erfindungsgemässen umhüllten teilchenförmigen Zusatzmittel werden beispielsweise hergestellt, indem man einen pulverförmigen Kern mit den Umhüllungssubstanzen, welche in der Regel aus einer wässerige Lösung oder Suspension der Bestandteile dieser Umhüllungssubstanz bestehen, behandelt und anschliessend trocknet. Dabei kann man beispielsweise den Kern mit der wässerigen Umhüllungssubstanz in einem Mischer vermischen und anschliessend die so behandelten Teilchen trocknen, oder man kann in ebenfalls bekannter Weise das wässerige Umhüllungsmittel in einem mit Warmluft durchströmten Wirbelschichttrockner auf die Partikel aufsprühen, wobei gleichzeitig eine Trocknung stattfindet.

Zur Herstellung der erfindungsgemäss umhüllten Teilchen in einer Wirbelschicht werden die in der Wirbelschicht befindlichen zu umhüllenden Kerne unter Aufrechterhaltung einer Wirbelschichttemperatur von 30 bis 100°C mit dem Umhüllungsmaterial besprüht und gleichzeitig oder anschliessend getrocknet. Werden mehrere Schichten aufgebracht, so werden die wässerigen Lösungen oder Dispersionen der Umhüllungsmaterialien hintereinander aufgesprüht.

Selbstverständlich ist die Erfindung nicht auf das gezeigte und beschriebene Ausführungsbeispiel beschränkt.

**Bezugszeichenliste**

| | |
|---|---|
| 1 | Zusatzmittel |
| 2 | erster Verflüssiger |
| 3 | zweiter Verflüssiger |
| 4 | Kern |
| 5 | erste Zwischenschicht |
| 6 | zweite Zwischenschicht |
| T | Zeit |

**Patentansprüche**

1. Pulverförmiges Zusatzmittel (1) insbesondere für hydraulische Bindemittel,
**dadurch gekennzeichnet,**
**dass** die pulverförmigen Teilchen (1) des Zusatzmittels eine innere Schicht (2) und eine äussere Schicht (3) aus einem Material das als Zusatzmittel wirkt aufweisen.

2. Zusatzmittel nach Anspruch 1,
**dadurch gekennzeichnet,**
**dass** die pulverförmigen Teilchen des Zusatzmittels weitere Schichten (5, 6) anderer Materialien aufweist.

3. Zusatzmittel nach Anspruch 1 oder 2,
**dadurch gekennzeichnet,**
**dass** die pulverförmigen Teilchen des Zusatzmittels einen Kern (4) aufweisen.

4. Zusatzmittel nach einem der Ansprüche 1 bis 3,
**dadurch gekennzeichnet,**
**dass** die weiteren Schichten (2, 3, 5, 6) oder der Kern (4) aus einem Verflüssiger bestehen und das Zusatzmittel als Dispersionshilfsmittel dient.

5. Zusatzmittel nach Anspruch 4,
**dadurch gekennzeichnet,**
**dass** die als Verflüssiger wirkenden Schichten aus Naphtalinsulfonat, Ligninsulfonat, Melaminsulfonat, Polycarboxylat und/oder Polyacrylat bestehen.

6. Zusatzmittel nach einem der vorhergehenden Ansprüche,
**dadurch gekennzeichnet,**
**dass** die weiteren Schichten (5, 6) oder der Kern (4) aus Luftporenbildner, Verzögerer, Beschleuniger, Stabilisierer, Chromatreduzierer, Einpresshilfen, Schaumbildner, Dichtungsmittel, Recyclinghilfen, Polyvinylalkohol oder Mischungen der vorgenannten Zusatzmittel bestehen.

7. Zusatzmittel nach Anspruch 6,
**dadurch gekennzeichnet,**
**dass** der Kern aus Zement, Silikafume, Flugasche, Leichtzuschlag, Schlacke, organischen oder anorganischen Fasermaterialien, mineralisches Trägermaterial besteht.

8. Zusatzmittel nach einem der vorhergehenden Ansprüche,
**dadurch gekennzeichnet,**
**dass** zumindest eine innere Schicht der pulverförmigen Teilchen des Zusatzmittels aus Polycarboxylat besteht.

9. Zusatzmittel nach einem der vorhergehenden Ansprüche,
**dadurch gekennzeichnet,**
**dass** zumindest eine äussere Schicht der pulverförmigen Teilchen des Zusatzmittels aus Naphtalinsulfonat, Ligninsulfonat und/oder Melaminsulfonat besteht.

10. Verfahren zur Herstellung eines pulverförmigen Zusatzmittels (1) insbesondere für hydraulische Bindemittel,
**dadurch gekennzeichnet,**
**dass** eine innere Schicht (2) aus einem Material das als Zusatzmittel wirkt hergestellt wird,
und das eine äussere Schicht (3) aus einem Material das als Zusatzmittel wirkt auf die innere Schicht aufgetragen wird.

11. Verfahren nach Anspruch 10,
**dadurch gekennzeichnet,**
**dass** zwischen der inneren Schicht (2) und der äusseren Schicht (3) eine weitere Schicht (6) aufgetragen wird.

12. Verfahren nach Anspruch 10 oder 11,
**dadurch gekennzeichnet,**
**dass** die innere Schicht (2) auf eine weitere Schicht (5) oder einen Kern (4) aufgetragen wird.

13. Verfahren nach einem der Ansprüche 10 bis 12,
**dadurch gekennzeichnet,**
**dass** die weiteren Schichten (2, 3, 5, 6) oder der Kern (4) aus einem Verflüssiger bestehen.

14. Verfahren nach einem der Ansprüche 10 bis 13,
**dadurch gekennzeichnet,**
**dass** die weiteren Schichten (5, 6) oder der Kern (4) aus Luftporenbildner, Verzögerer, Beschleuniger, Stabilisierer, Chromatreduzierer, Einpresshilfen, Schaumbildner, Dichtungsmittel, Recyclinghilfen, Polyvinylalkohol oder Mischungen der vorgenannten Zusatzmittel bestehen.

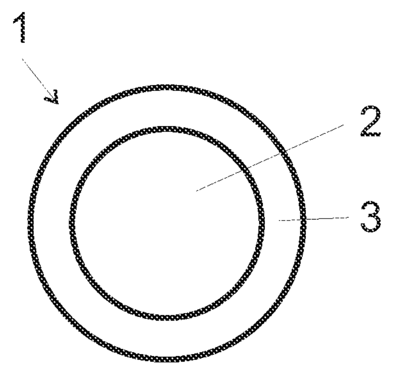


FIG. 1

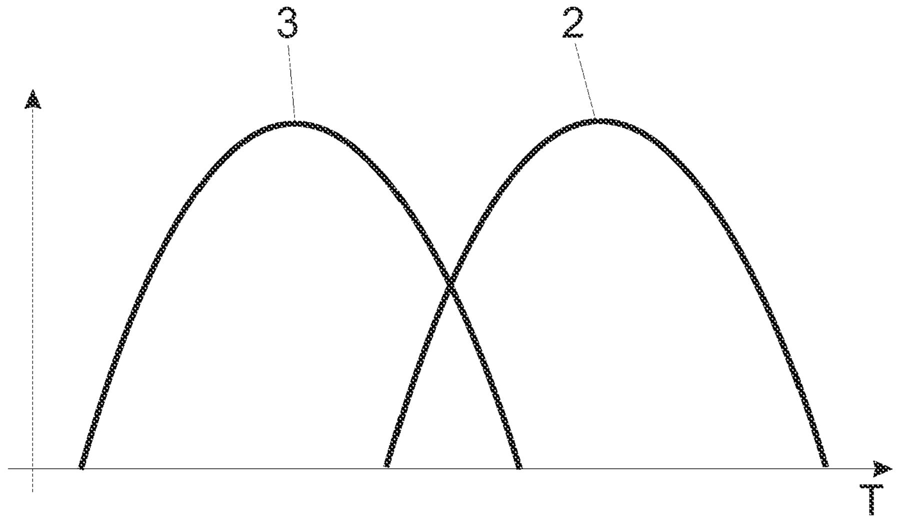


FIG. 2

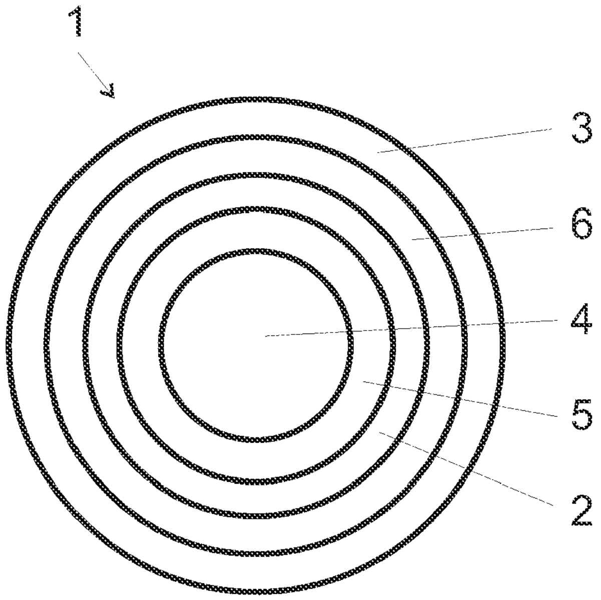


FIG. 3

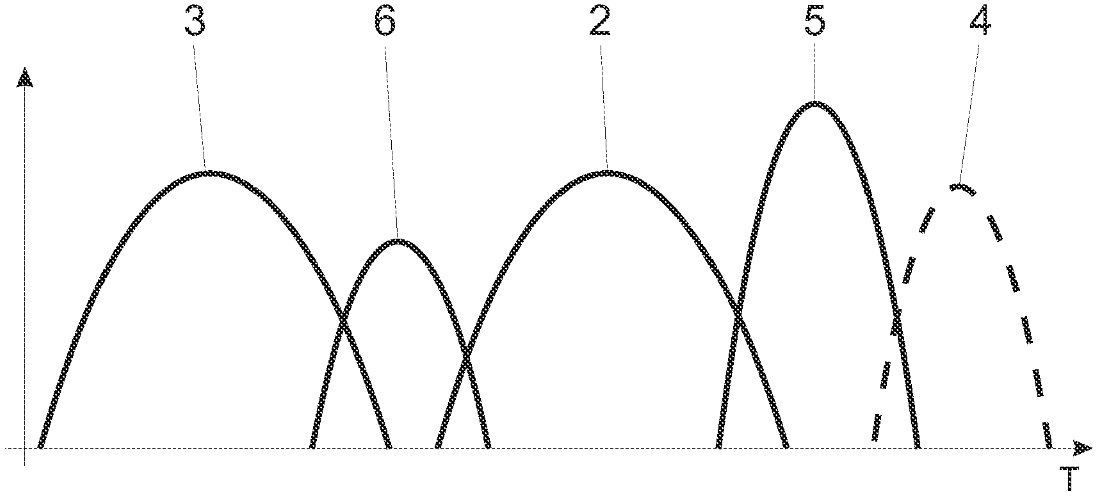


FIG. 4

Europäisches Patentamt

# EUROPÄISCHER RECHERCHENBERICHT

Nummer der Anmeldung
EP 07 11 8886

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | WO 2005/075578 A (MERCK PATENT GMBH [DE]; HENNEMANN ALFRED [DE]; ENTENMANN MARC [DE]; MU) 18. August 2005 (2005-08-18)<br>* Ansprüche 1,2,4,8,12,16 *<br>* Seite 7, Zeile 26 - Seite 8, Zeile 2 *<br>----- | 1-3,7, 10-12 | INV.<br>C04B40/00 |
| X | DE 22 00 163 A1 (KNAUF WESTDEUTSCHE GIPS) 19. Juli 1973 (1973-07-19)<br>* Ansprüche 1,2 *<br>----- | 1,10 | |
| X | WO 03/074615 A (SACHTLEBEN CHEMIE GMBH [DE]; AMIRZADEH-ASL DJAMSCHID [DE]) 12. September 2003 (2003-09-12)<br>* Seite 4, Zeilen 19-23; Anspruch 1 *<br>----- | 1,3,10 | |
| X,D | WO 2006/027363 A (SIKA TECHNOLOGY AG [CH]; BLEIBLER ALEXANDER [CH]; MAEDER URS [CH]; STU) 16. März 2006 (2006-03-16)<br>* Ansprüche 1,16; Beispiele *<br>----- | 1,8 | |
| | | | RECHERCHIERTE SACHGEBIETE (IPC) |
| | | | C04B |

Der vorliegende Recherchenbericht wurde für alle Patentansprüche erstellt

| Recherchenort | Abschlußdatum der Recherche | Prüfer |
|---|---|---|
| München | 7. Dezember 2007 | Pollio, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 07 11 8886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2007

| Im Recherchenbericht angeführtes Patentdokument | Datum der Veröffentlichung | Mitglied(er) der Patentfamilie | Datum der Veröffentlichung |
|---|---|---|---|
| WO 2005075578 A | 18-08-2005 | BR PI0507503 A | 26-06-2007 |
| | | CN 1918247 A | 21-02-2007 |
| | | DE 102004006145 A1 | 25-08-2005 |
| | | EP 1711562 A2 | 18-10-2006 |
| | | JP 2007525572 T | 06-09-2007 |
| | | KR 20060122909 A | 30-11-2006 |
| | | US 2007166544 A1 | 19-07-2007 |
| DE 2200163 A1 | 19-07-1973 | KEINE | |
| WO 03074615 A | 12-09-2003 | AT 299916 T | 15-08-2005 |
| | | DE 10209698 A1 | 18-09-2003 |
| | | EP 1483336 A1 | 08-12-2004 |
| | | US 2005107493 A1 | 19-05-2005 |
| WO 2006027363 A | 16-03-2006 | AU 2005281721 A1 | 16-03-2006 |
| | | CA 2579300 A1 | 16-03-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0845444 A1
- WO 03080714 A1
- US 3537869 A
- EP 0214412 A1
- DE 3204326 A1
- DE 1671017
- EP 1136508 A1
- EP 1138696 A1
- EP 1138697 A1
- WO 0047533 A1
- WO 2006027363 A1